# EUROPEAN PATENT APPLICATION

(11) **EP 4 507 048 A1**
(43) Date of publication of application: **12.02.2025**
(21) Application number: 23784591.2
(22) Date of filing: 08.03.2023
(51) Int. Cl.: H01M 10/052, H01M 4/13, H01M 4/131, H01M 4/36, H01M 4/505, H01M 4/525, H01M 4/62, H01M 10/0567

(54) **NON-AQUEOUS ELECTROLYTE SECONDARY BATTERY**

(30) Priority: 08.04.2022 JP 2022064587
(71) Applicant: Panasonic Intellectual Property Management Co., Ltd., Kadoma-shi, Osaka 571-0057 (JP)
(72) Inventor: SHIRAKAMI, Atsuro, Kadoma-shi, Osaka 571-0057 (JP); OKI, Yukihiro, Kadoma-shi, Osaka 571-0057 (JP)
(74) Representative: Novagraaf International SA
(86) International application number: PCT/JP2023/008912
(87) International publication number: WO 2023/195298

(57) **Abstract**

Disclosed is a non-aqueous electrolyte secondary battery including: a positive electrode; a negative electrode; and a non-aqueous electrolyte, wherein the positive electrode includes a positive electrode current collector and a positive electrode active material layer supported on the positive electrode current collector, the positive electrode active material layer contains active material particles, a binder, and a first organic phosphorus compound, a content Cpn of the first organic phosphorus compound in the positive electrode active material layer is 0.1 mass% or more and 5 mass% or less, and the non-aqueous electrolyte contains a non-aqueous solvent, an electrolyte salt, and a second organic phosphorus compound.

## Description

### [Technical Field]

The present disclosure relates to a non-aqueous electrolyte secondary battery.

### [Background Art]

Patent Literature 1 discloses that the use of a positive electrode active material that has a coating film formed from at least one selected from specific phosphonic acid esters and specific phosphite triesters can suppress the generation of gas during charge and discharge.

Patent Literature 2 discloses that the use of an electrolyte solution that contains a solvent that contains a specific phosphonic acid compound improves the chemical stability of the electrolyte solution, which suppresses the decomposition reaction of the electrolyte solution during charge and discharge.

Patent Literature 3 proposes a battery including: a positive electrode that contains a positive electrode active material; a negative electrode that contains a lithium transition metal compound with a spinel structure as a negative electrode active material; and an electrolyte solution that contains a solvent and an electrolyte salt, wherein at least one of the positive electrode and the electrolyte solution contains a phosphorus compound with a P-OH structure.

### [Citation List]

### [Patent Literatures]

[PTL 1] WO 2017/126276
[PTL 2] Japanese Laid-Open Patent Publication No. 2009-224258
[PTL 3] Japanese Laid-Open Patent Publication No. 2013-152825

### [Summary of Invention]

### [Technical Problem]

It is often the case that a positive electrode for a non-aqueous electrolyte secondary battery contains metal compound particles as active material particles. In the positive electrode, metal ions may elute from the positive electrode to the non-aqueous electrolyte. The metal ions eluted from the positive electrode deposit on the negative electrode, which may cause micro short-circuits. The elution of metal ions from the positive electrode becomes more prominent as the upper limit voltage of the secondary battery is higher (for example, when the upper limit voltage is greater than 4.3 V). The upper limit voltage is usually the battery voltage in a fully charged state (end-of-charge voltage), and corresponds to a 100% state of charge (SOC).

### [Solution to Problem]

An aspect of the present disclosure relates to a non-aqueous electrolyte secondary battery including: a positive electrode; a negative electrode; and a non-aqueous electrolyte, wherein the positive electrode includes a positive electrode current collector and a positive electrode active material layer supported on the positive electrode current collector, the positive electrode active material layer contains active material particles, a binder, and a first organic phosphorus compound, a content Cpn of the first organic phosphorus compound in the positive electrode active material layer is 0.1 mass% or more and 5 mass% or less, and the non-aqueous electrolyte contains a non-aqueous solvent, an electrolyte salt, and a second organic phosphorus compound.

Another aspect of the present disclosure relates to a non-aqueous electrolyte secondary battery including: a positive electrode; a negative electrode; and a non-aqueous electrolyte, wherein the positive electrode includes a positive electrode current collector and a positive electrode active material layer supported on the positive electrode current collector, the positive electrode active material layer contains active material particles, a binder, and a first organic phosphorus compound, a content of the first organic phosphorus compound in the positive electrode active material layer is 0.1 mass% or more and 5 mass% or less, the non-aqueous electrolyte contains a non-aqueous solvent, an electrolyte salt, and a second organic phosphorus compound, and the first organic phosphorus compound and the second organic phosphorus compound are each independently represented by the following general formula (1):

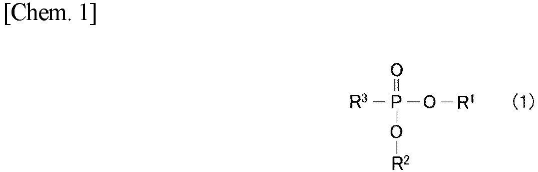

where R¹ and R² each independently represent a surface of the active material particle, -H, -CH₂X, -CH₂CH₂X, or -Si((CH₂)ₙCH₃)₃, R³ represents -(CH₂)ₘCH₂X or -O-Si((CH₂)ₙCH3)3, X represents -H, -NH₂, -COOH, -CN, or -F, integers n that define R¹, R², and R³ each independently represent 0 or 1, an integer m that defines R³ represents 0 to 16, and when there are a plurality of Xes, the plurality of Xes are independent of each other.

Yet another aspect of the present disclosure relates to a non-aqueous electrolyte secondary battery including: a positive electrode; a negative electrode; and a non-aqueous electrolyte, wherein the positive electrode includes a positive electrode current collector and a positive electrode active material layer supported on the positive electrode current collector, the positive electrode active material layer contains active material particles, a binder, and a phosphorus element, a content of the phosphorus element in the positive electrode active material layer is 100 ppm or more and 4000 ppm or less based on mass, the non-aqueous electrolyte contains a non-aqueous solvent, an electrolyte salt, and a phosphorus element, and Cpn/Cen that is a ratio of a content Cpn (mass%) of the phosphorus element in the positive electrode active material layer relative to a content Cen (mass%) of the phosphorus element in the non-aqueous electrolyte is 0.1/4.0 or more and 4.0/3.0 or less.

### [Advantageous Effects of Invention]

According to the present disclosure, it is possible to, for example, suppress elution of metal ions from the positive electrode of a charged non-aqueous electrolyte secondary battery.

Novel features of the present invention are set forth in the appended claims. However, the present invention will be well understood from the following detailed description of the present invention with reference to the drawings, in terms of both the configuration and the content together with other objects and features of the present invention.

### [Brief Description of Drawing]

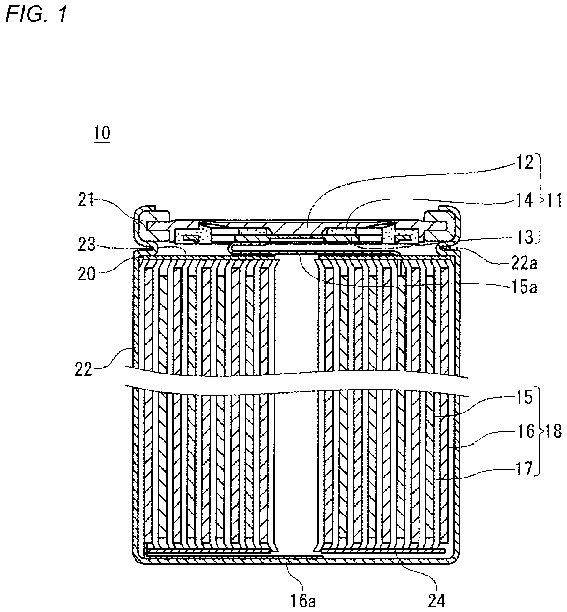

[FIG. 1] FIG. 1 is a vertical cross-sectional view schematically showing an internal structure of a non-aqueous electrolyte secondary battery according to an embodiment of the present disclosure.

### [Description of Embodiment]

Hereinafter, a non-aqueous electrolyte secondary battery according to an embodiment of the present disclosure will be described by way of examples. However, the present disclosure is not limited to the examples given below. In the following description, specific numerical values and materials may be listed as examples. However, other numerical values and materials may also be used as long as the advantageous effects of the present disclosure can be obtained. In the specification of the present application, the expression "a range of a numerical value A to a numerical value B" encompasses that the range includes the numerical value A and the numerical value B, and thus can also be interpreted as "a numerical value A or more and a numerical value B or less". In the following description, lower and upper limits of numerical values of specific physical properties, conditions, and the like will be shown. The lower limits and the upper limits shown below can be combined in any way as long as the lower limits are not greater than or equal to the upper limits. In the case where a plurality of materials are listed as examples, only one material may be selected from among the plurality of materials and used, or a combination of two or more may be selected from among the plurality of materials.

The term "non-aqueous electrolyte secondary battery" broadly encompasses a secondary battery that contains a non-aqueous electrolyte. However, the following description will be given mainly of, as an example of a non-aqueous electrolyte secondary battery, a lithium ion secondary battery, a lithium secondary battery (lithium metal secondary battery), and the like. The non-aqueous electrolyte may be in the form of a liquid, a gel, or the like.

A non-aqueous electrolyte secondary battery includes a positive electrode, a negative electrode, and a non-aqueous electrolyte. A separator may be provided between the positive electrode and the negative electrode. The positive electrode, the negative electrode, and the separator may together constitute various forms of electrode groups. For example, the positive electrode and the negative electrode may be wound with the separator interposed therebetween to form a columnar electrode group (a wound electrode group). The non-aqueous electrolyte secondary battery may include a battery case for housing the electrode group and the non-aqueous electrolyte.

The positive electrode includes a positive electrode current collector and a positive electrode active material layer supported on the positive electrode current collector. The positive electrode active material layer is formed directly or indirectly (via a different material) on, for example, a surface of the positive electrode current collector in the form of a sheet.

The positive electrode current collector is made of a sheet-shaped conductive material. As the positive electrode current collector, a non-porous conductive substrate (a metal foil or the like) or a porous conductive substrate (a mesh, a net, a punched sheet, or the like) is used.

The positive electrode active material layer is supported on one or both surfaces of the positive electrode current collector. The positive electrode active material layer is usually a positive electrode material mixture layer formed using a positive electrode material mixture, and is in the form of a layer or a coating.

The positive electrode material mixture (or in other words, the positive electrode active material layer) contains active material particles (positive electrode active material particles), a binder, and a first organic phosphorus compound. The active material particles contain a metal compound. The metal compound may contain, for example, a lithium-containing transition metal oxide. As the binder, a resin material is used. The resin material may contain, for example, a fluorine resin.

The first organic phosphorus compound is an organic compound that contains phosphorous. Examples of the organic compound that contains phosphorous include phosphoric acid, phosphonic acid, a phosphoric acid ester, a phosphonic acid ester, and the like. However, in the present disclosure, at least a first organic phosphorus compound represented by the following formula (1) is used. The first organic phosphorus compound may be in the form of a liquid or a solid at ambient temperature. In the specification of the present application, the term "ambient temperature" refers to a temperature of 20°C or more and 30°C or less.

The content of the first organic phosphorous compound in the positive electrode active material layer is, for example, 0.1 mass% or more and 5 mass% or less, and may be 0.2 mass% to 3 mass%, or 0.5 mass% to 2 mass%. When the first organic phosphorus compound is contained in the positive electrode active material layer at a content within the above-described range, a state that is different from the state formed by simply dissolving an organic phosphorus compound in the non-aqueous electrolyte is formed.

Specifically, a coating film that contains the first organic phosphorus compound (or a coating film derived from the first organic phosphorus compound) is formed to cover at least a portion of surfaces of the positive electrode active material particles. The coating film is sufficiently thicker than a molecular layer that corresponds to the molecular size of the first organic phosphorus compound, and exhibits a strong protection effect that suppresses side reactions in which the positive electrode active material may be involved. The thick coating film obtained from the first organic phosphorus compound may be attached to the surfaces of the positive electrode active material particles in the form of dots (or in other words, in the form of islands), rather than covering the entire surfaces of the positive electrode active material particles.

In order to contain the first organic phosphorus compound into the positive electrode active material layer at a high content, it is important to mix a significant amount of the first organic phosphorus compound with the positive electrode material mixture for constituting the positive electrode active material layer. When the first organic phosphorus compound is contained into the positive electrode active material layer at a high content, mixing a sufficient amount of the first organic phosphorus compound with a positive electrode material mixture slurry is an effective means.

Conventionally, attempts have been made to impregnate the positive electrode active material or the positive electrode with a solution prepared by dissolving an organic phosphorus compound in a predetermined solvent. In this case, in order to increase the impregnation properties and the uniformity of distribution of the organic phosphorus compound, the amount of the organic phosphorus compound dissolved in the solution is limited to reduce the viscosity of the solution to a significantly low level. Even when this solution is used, it is only possible to form, for example, a thin coating film as thin as the molecular size of the organic phosphorus compound.

Also, conventionally, attempts have also been made to dissolve an organic phosphorus compound in the non-aqueous electrolyte. However, by simply dissolving an organic phosphorus compound in the non-aqueous electrolyte, it is difficult to contain the organic phosphorus compound into the positive electrode active material layer at a high content. Considering the viscosity of the non-aqueous electrolyte, ion conductivity, the influence on the negative electrode, suppression of side reactions, and the like, there is of course an upper limit to the content of the organic phosphorus compound that can be dissolved in the non-aqueous electrolyte. At a content less than or equal to the upper limit, it is difficult to contain the organic phosphorus compound into the positive electrode active material layer at a high content.

At least a portion of side reactions in which the positive electrode active material is involved is a reaction that causes elution of metal ions. Such a side reaction may cause decomposition of the non-aqueous electrolyte. Also, a portion of the side reactions may be a reaction that causes a disorder of the crystal structure of the positive electrode active material. The disorder of the crystal structure means a change in the arrangement of the constituent elements of the positive electrode active material. For example, when the positive electrode active material is a lithium-containing transition metal oxide, the arrangement of lithium atoms and transition metal atoms may be partially replaced. Such a disorder (or atomic mixing) causes an increase in the resistance of the positive electrode, a reduction in the capacity of the positive electrode, and the like. Also, it may facilitate the elution of metal ions.

At least a portion of the first organic phosphorus compound contained in the positive electrode active material layer may be oxidized or decomposed in the positive electrode active material layer, or may react with a component that constitutes a surface of the positive electrode active material or attaches to the surface of the positive electrode active material. In this case, a residue that contains phosphorus atoms (P) of the first organic phosphorus compound is contained into the positive electrode active material layer. Accordingly, the expression "the content of the first organic phosphorous compound in the positive electrode active material layer" can also be interpreted as "the content of the phosphorus element in the positive electrode active material layer". In this case, the content of the phosphorus element in the positive electrode active material layer is, for example, based on mass, 100 ppm or more and 4000 ppm or less, and may be 500 ppm to 3000 ppm, or 1000 ppm to 2000 ppm.

The content of the first organic phosphorus compound or the phosphorus element in the positive electrode active material layer can be measured using an inductively coupled plasma atomic emission spectroscopy apparatus (ICP-AES), an electron beam micro analyzer (EPMA), an energy dispersive X-ray spectroscopy apparatus (EDX), infrared spectroscopy (FT-IR), gas chromatograph mass spectrometry (GC-MS), or any other analysis method.

As a measurement target, the positive electrode is taken out of the non-aqueous electrolyte secondary battery with a depth of discharge (DOD) of 90% or more. The term "depth of discharge (DOD)" refers to the proportion of the amount of electricity discharged relative to the rated amount of electricity of the battery in a fully charged state. The amount of electricity charged (or in other words, full charge amount) required to charge the battery in a fully discharged state (DOD = 100%) to a fully charged state (SOC = 100%, DOD = 0%) corresponds to the rated capacity. The voltage of the battery in a fully charged state corresponds to the end-of-charge voltage. The voltage of the battery in a fully discharged state corresponds to the end-of-discharge voltage.

It is considered that, when the positive electrode active material layer contains the first organic phosphorus compound or the phosphorus element at a content within the above-described range, a relatively thick phosphorus element-containing coating film is likely to be formed. The coating film is formed in the form of, for example, islands to cover at least a portion of the surfaces of the positive electrode active material particles.

On the other hand, the non-aqueous electrolyte contains a non-aqueous solvent, an electrolyte salt, and a second organic phosphorus compound. That is, in the non-aqueous electrolyte secondary battery according to the present disclosure, it is a main feature to contain an organic phosphorus compound into not only into the positive electrode active material layer but also the non-aqueous electrolyte.

The first organic phosphorus compound contained in the positive electrode active material layer can form a thick coating film that protects the positive electrode active material particles from side reactions, but the coating films attach to the surfaces of the positive electrode active material particles are in the form of islands, and it is therefore difficult to protect the entire surfaces of the active material particles. Rather, protecting the entire surfaces of the active material particles with a thick coating film causes an increase in resistance, and it is not desirable. In this regard, the second organic phosphorus compound serves to cover the surfaces of the active material particles not covered with the thick coating film formed from the first organic phosphorus compound with a thin coating film. That is, it can be said that the second organic phosphorus compound functions as a coating patching material that increases the coverage of the active material particles with the coating film. As a result, it is possible to protect substantially the entire surfaces of the active material particles without significantly increasing the resistance. To put it differently, the second organic phosphorus compound attaches to the surfaces of the active material particles to fill the gaps (exposed surfaces of the active material particles) not covered with the thick coating film formed from the first organic phosphorus compound. With this configuration, the effect of suppressing the elution of metal ions can be enhanced prominently.

The content of the second organic phosphorus compound in the non-aqueous electrolyte is, for example, 0.1 mass% or more and 3 mass% or less, and may be 0.2 mass% to 2 mass%, or 0.5 mass% to 1.5 mass%. When the second organic phosphorus compound is contained in the non-aqueous electrolyte at a content within the above-described range, it is possible to form a coating film that is sufficiently thin to patch the gaps on the surfaces of the active material particles not covered with the thick coating film and also prevent the resistance from increasing. Also, the viscosity of the non-aqueous electrolyte can be maintained at a sufficiently low level, and the influence of side reactions on the negative electrode can be minimized.

In the above-described case, Cpn/Cen that is the ratio of the content Cpn (mass%) of the first organic phosphorous compound in the positive electrode active material layer relative to the content Cen (mass%) of the second organic phosphorus compound in the non-aqueous electrolyte may be, for example, 0.1/4.0 or more and 4.0/3.0 or less (preferably 0.5/4.0 to 3.0/3.0).

The content of the second organic phosphorus compound in the non-aqueous electrolyte can also be evaluated from the content of phosphorus atoms (P) in the second organic phosphorus compound. Accordingly, the expression "the content of the second organic phosphorus compound in the non-aqueous electrolyte" can also be interpreted as "the content of the phosphorus element in the non-aqueous electrolyte". The content of the phosphorus element in the non-aqueous electrolyte is, for example, based on mass, 100 ppm or more and 3000 ppm or less, and may be 500 ppm to 2500 ppm, or 750 ppm to 1500 ppm.

The non-aqueous electrolyte secondary battery according to the present disclosure can also be interpreted as "a non-aqueous electrolyte secondary battery including a positive electrode, a negative electrode, and a non-aqueous electrolyte, wherein the positive electrode includes a positive electrode current collector and a positive electrode active material layer supported on the positive electrode current collector, the positive electrode active material layer contains active material particles, a binder, and a phosphorus element, a content of the phosphorus element in the positive electrode active material layer is, based on mass, 100 ppm or more and 4000 ppm or less, the non-aqueous electrolyte contains a non-aqueous solvent, an electrolyte salt, and a phosphorus element, Cpn/Cen that is a ratio of the content Cpn (mass%) of the phosphorus element in the positive electrode active material layer relative to a content Cen (mass%) of the phosphorus element in the non-aqueous electrolyte is 0.1/4.0 or more and 4.0/3.0 or less".

The content of the second organic phosphorus compound or the phosphorus element in the non-aqueous electrolyte can be measured using an inductively coupled plasma atomic emission spectroscopy apparatus (ICP-AES), gas chromatograph mass spectrometry (GC-MS), infrared spectroscopy (FT-IR), or any other analysis method. As a measurement target, the positive electrode is taken out of the secondary battery with a depth of discharge (DOD) of 90% or more.

As described above, the thickness of the coating film that covers at least a portion of the surfaces of the active material particles is not uniform. The coating film may have at least partially a thickness of 0.2 nm or more, or 200 nm or more. The thickness of the coating film can be determined based on, for example, the following method. However, there is no particular limitation on the measurement method, and the thickness of the coating film can be measured using a method that can substantially estimate the thickness of the coating film, without a limitation.

### (1) Cross-Section Photography of Positive Electrode using Scanning Electron Microscope (SEM)

First, a positive electrode as a measurement target is prepared. The positive electrode as the measurement target is taken out of the secondary battery with a depth of discharge (DOD) of 90% or more.

Next, the positive electrode active material layer and the positive electrode current collector are simultaneously cut along the thickness direction of the positive electrode to form a cross section. At this time, filling the positive electrode active material layer with a thermosetting resin and curing the thermosetting resin may be performed. For example, a positive electrode cross-section sample is obtained using a CP (cross-section polisher) method, an FIB (focused ion beam) method, or the like. The cross-section sample is observed using an SEM. The magnification of SEM observation may be set to, for example, 500 times to 5000 times. An SEM image is obtained by capturing an image such that a field of view of 40 µm² to 400 µm² can be observed in a center region as close as possible to the center of the positive electrode active material layer in the thickness direction of the positive electrode active material layer.

### (2) Elemental Analysis based on Energy Dispersive X-Ray Spectroscopy (EDX)

Elemental analysis based on EDX is performed using the SEM image of the positive electrode cross-section sample.

### (3) Creation of Phosphorus Element Map

A phosphorus element map is obtained by extracting phosphorus element-derived components (P components) from the EDX analysis data of the positive electrode cross-section sample. With the phosphorus element map, it is possible to count all phosphorus element-derived components in the field of view.

### (4) Measurement of Thickness of Coating Film

The obtained phosphorus element map can be expressed in a two-dimensional image. In the two-dimensional image, P components that constitute the coating film (for example, components that are distributed concentratedly near the surfaces of the active material particles) and P components that do not constitute the coating film (for example, components that suspend in the non-aqueous electrolyte between the active material particles) can be distinguished from each other. Five active material particles are selected, and a maximum thickness of the coating film estimated from P components distributed concentratedly near the surfaces of the active material particles is determined, and the average value of the measured 5 values is calculated.

The first organic phosphorus compound and the second organic phosphorus compound are each independently represented by the following general formula (1):

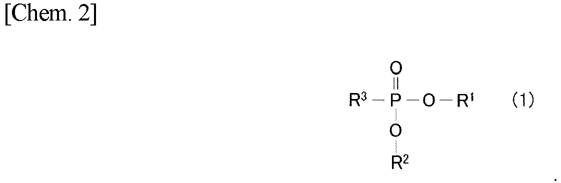

That is, the first organic phosphorus compound and the second organic phosphorus compound may be the same compounds or different compounds. Also, the first organic phosphorus compound and the second organic phosphorus compound may be products derived from the same compound or different compounds.

In the general formula (1), R¹ to R³ are defined as follows. Hereinafter, the organic phosphorus compounds defined by the general formula (1) (the first organic phosphorus compound and the second organic phosphorus compound) will also be referred to collectively as an "organic phosphorus compound (P)".

Accordingly, the non-aqueous electrolyte secondary battery according to the present disclosure can also be interpreted as "a non-aqueous electrolyte secondary battery including a positive electrode, a negative electrode, and a non-aqueous electrolyte, wherein the positive electrode includes a positive electrode current collector and a positive electrode active material layer supported on the positive electrode current collector, the positive electrode active material layer contains active material particles, a binder, and a first organic phosphorus compound (P), a content of the first organic phosphorus compound (P) in the positive electrode active material layer is 0.1 mass% or more and 5 mass% or less, and the non-aqueous electrolyte contains a non-aqueous solvent, an electrolyte salt, and a second organic phosphorus compound (P).

Likewise, the non-aqueous electrolyte secondary battery according to the present disclosure can also be interpreted as "a non-aqueous electrolyte secondary battery including a positive electrode, a negative electrode, and a non-aqueous electrolyte, wherein the positive electrode includes a positive electrode current collector and a positive electrode active material layer supported on the positive electrode current collector, the positive electrode active material layer contains active material particles, a binder, and a phosphorus element, a content of the phosphorus element in the positive electrode active material layer is, based on mass, 100 ppm or more and 4000 ppm or less, and the non-aqueous electrolyte contains a non-aqueous solvent, an electrolyte salt, and an organic phosphorus compound (P) (a second organic phosphorus compound)".

Here, R¹ and R² each independently represent a surface of the active material particle, -H, -CH₂X, -CH₂CH₂X, or -Si((CH₂)ₙCH3)3 (hereinafter also referred to as an "organic silyl group (EM)".

Also, R³ represents -(CH₂)ₘCH₂X or -O-Si((CH₂)ₙCH₃))₃ (an organic silyloxy group). The organic silyloxy group (-O-Si((CH₂)ₙCH3)3) includes an organic silyl group (EM).

Integers n that define R¹, R², and R³ each independently represent 0 or 1. That is, all of the organic silyl groups (EM) of R¹, R², and R³ may be the same group or different 3 groups. Alternatively, any two of the organic silyl groups (EM) of R¹, R², and R³ may be the same group, and the remaining one may be a different group.

An integer m that defines R³ represents 0 to 16, and may represent 4 to 16, or 9 to 14. The organic phosphorus compound (P) with R³ ( -(CH₂)ₘCH₂X group), or the coating film derived therefrom are highly stable and remain in the positive electrode active material layer over a long period of time, and thus the effect of suppressing side reactions in which the positive electrode active material is involved is high. In particular, the organic phosphorus compound (P) with R³ representing an alkyl group having 5 to 17 carbon atoms is often in the form of a solid at ambient temperature, and thus the dissolution speed in the solvent in the non-aqueous electrolyte is sufficiently slow. Accordingly, the effect of filling the surfaces of the active material particles with the coating film derived from the organic phosphorus compound (P) can be exhibited as appropriate.

The organic silyl group (EM) may be any one of -Si(CH₃)₃, -Si(CH₂CH₃)₃, -SiCH₃(CH₂CH₃)₂, and -SiCH₂CH₃(CH₃)₂.

The surface of the positive electrode active material that can be bonded to a P-O- group is an embodiment of R¹ or R². Specifically, the term "the surface of the positive electrode active material" refers to a component that constitutes the surface or attaches to the surface, which may be, for example, a metal atom, a cation, an oxygen atom, an anion, or the like that can constitute the positive electrode active material.

X represents -H, -NH₂, -COOH, -CN, or -F. When there are a plurality of Xes in the organic phosphorus compound (P), the plurality of Xes are independent of each other. That is, all of the plurality of (three) Xes may be the same or different. Alternatively, any two of the plurality of (three) Xes may be the same, and the remaining one may be different.

R¹ and R² may each independently represent -Si((CH₂)ₙCH₃)₃, and R³ may represent -O-Si((CH₂)ₙCH₃)₃. In this case, the organic phosphorus compound (P) is a trialkylsilyl phosphate (O = P(OSiR₃) and R = an alkyl group). The trialkylsilyl phosphate may be, for example, tris(trimethylsilyl)phosphate (trimethylsilyl phosphate (TMSP) (O = P(OSi(CH₃)₃))), triethylsilyl phosphate (O = P(OSi(CH₂CH₃)₃)), or the like.

R¹ and R² may each independently represent -H, and R³ may represent -(CH₂)ₘCH₃. In this case, the organic phosphorus compound (P) is an alkyl phosphonate (O = P(OH)₂R and R = an alkyl group). The alkyl phosphonate may be, for example, hexylphosphonic acid, heptylphosphonic acid, octylphosphonic acid, nonylphosphonic acid, decylphosphonic acid, or the like.

The organic phosphorus compound (P) contained in the positive electrode active material layer is stable even in a high-voltage environment. Also, the organic phosphorus compound (P) contained in the positive electrode active material layer is highly likely to come into contact with the active material particles, and thus exhibits an excellent effect of suppressing oxidative decomposition of the non-aqueous electrolyte. Furthermore, when at least a portion of the organic phosphorus compound (P) is in the form of a solid at ambient temperature, or when the organic phosphorus compound (P) can undergo a condensation reaction on the surfaces of the active material particles, there is a tendency that a coating film with an even higher level of protection effect is formed.

It is considered that, when the organic phosphorus compound (P) can undergo a condensation reaction on the surfaces of the active material particles, a coating film that has a thickness as thick as a multi-molecular layer and a high level of protection effect, and is stable even in a high-voltage atmosphere (for example, even at a voltage greater than 4.3 V) can be formed on the surfaces of the active material particles.

On the other hand, it is considered that, when the organic phosphorus compound (P) is in the form of a solid at ambient temperature, in a positive electrode slurry for forming the positive electrode or in the non-aqueous electrolyte secondary battery, the organic phosphorus compound (P) in the form of particles partially dissolves in a dispersion medium (for example, N-methyl-2-pyrrolidone) contained in the positive electrode slurry or in the non-aqueous electrolyte, and attaches to at least a portion of the surfaces of the active material particles to form a coating film with a high level of protection effect. In the non-aqueous electrolyte secondary battery, the dissolution speed of the organic phosphorus compound (P) in the non-aqueous solvent (for example, a carbonic acid ester) is slow, and thus the organic phosphorus compound (P) tends to gradually dissolve over a long period of time. For this reason, even if the coating film derived from the organic phosphorus compound (P) that has initially covered the active material particles is damaged, the coating film is patched as appropriate. Accordingly, even when the upper limit voltage of the non-aqueous electrolyte secondary battery is high (for example, even when the upper limit voltage is greater than 4.3 V), a sufficient effect of protecting the active material particles and suppressing a decomposition reaction of the non-aqueous electrolyte can be continuously obtained.

At least a portion of the organic phosphorus compound (P) may be present in the form of particles having a particle size of 0.1 µm or more and 5 µm or less in the positive electrode active material layer. When the organic phosphorus compound (P) has a particle size within the above-described range, it can be said that the organic phosphorus compound (P) is excessively contained in the positive electrode active material layer. The organic phosphorus compound (P) in the form of particles gradually dissolves over a long period of time to fill the surfaces of the active material particles with the coating film derived from the organic phosphorus compound (P) as appropriate. Thus, the effect of suppressing side reactions can be obtained for a longer period of time. The particle size of the organic phosphorus compound (P) may be 0.3 µm or more, or 1 µm or more. Also, the maximum particle size of the organic phosphorus compound (P) may be 3 µm or less, or 2 µm or less. When the maximum particle size is within the above-described range, the influence on the battery performance can be made sufficiently small. The particle size of the organic phosphorus compound (P) can be measured, for example, in the following manner.

### (1) Preparation of Positive Electrode Cross-Section Sample

First, a positive electrode as a measurement target is prepared. The positive electrode as the measurement target is taken out of the secondary battery with a depth of discharge (DOD) of 90% or more. Next, the positive electrode active material layer and the positive electrode current collector are simultaneously cut along the thickness direction of the positive electrode to form a cross section. At this time, filling the positive electrode active material layer with a thermosetting resin and curing the thermosetting resin may be performed. For example, a positive electrode cross-section sample is obtained using a CP (cross-section polisher) method, an FIB (focused ion beam) method, or the like.

### (2) Photography of Positive Electrode Cross-Section Sample using Scanning Electron Microscope (SEM)

Next, the cross-section sample is observed using an SEM. The SEM observation is performed at a low magnification (for example, 200 times to 1000 times). An SEM image is obtained by capturing an image such that a region with a length of 300 µm or more (desirably 400 µm or more) in the plane direction of the positive electrode active material layer can be observed.

### (3) Elemental Analysis based on Energy Dispersive X-Ray Spectroscopy (EDX)

Elemental analysis based on EDX is performed using the SEM image of the cross-section sample. An organic phosphorus compound (P) map is obtained by extracting organic phosphorus compound (P)-derived components (P components) from the EDX analysis data of the cross-section sample. Using the obtained map, organic phosphorus compound (P) particles are identified. The diameter of an equivalent circle that has the same area as the area of each of the identified particles is defined as the particle size of the organic phosphorus compound (P).

It is sufficient that one or more organic phosphorus compound (P) particles having a particle size 0.1 µm or more are observed in an observation field of view of 400 µm² (for example, a 20 µm × 20 µm rectangular observation field of view). However, it is desirable that 3 or more, or 6 or more organic phosphorus compound (P) particles are observed. The higher the number of organic phosphorus compound (P) particles having a particle size 0.1 µm or more observed in the observation field of view, the higher the effect of suppressing decomposition of the electrolyte in a high-voltage environment. The upper limit of the number of organic phosphorus compound (P) particles having a particle size 0.1 µm or more observed in the observation field of view is, for example, 16 or less. The number of organic phosphorus compound (P) particles having a particle size 0.1 µm or more may be an average value of the number of organic phosphorus compound (P) particles having a particle size 0.1 µm or more counted in a plurality of (for example, three or more) observation fields of view. It is desirable to set the observation fields of view near the center of the positive electrode active material layer of the cross-section sample.

### <Method for Producing Positive Electrode>

Next, an example of a method for producing a non-aqueous electrolyte secondary battery according to an embodiment of the present disclosure will be described.

The production method includes the steps of: providing a positive electrode that includes a positive electrode active material layer that contains a first organic phosphorus compound; providing a negative electrode; preparing a non-aqueous electrolyte that contains a second organic phosphorus compound; and assembling a secondary battery using the positive electrode, the negative electrode, and the non-aqueous electrolyte that were obtained.

The step of providing a positive electrode includes the steps of: (I) preparing a positive electrode slurry that contains active material particles (positive electrode active material particles), a binder, a first organic phosphorus compound (an organic phosphorus compound (P)), and a dispersion medium: (II) providing a positive electrode current collector; (III) applying the positive electrode slurry to a surface of the positive electrode current collector to form an applied coating film; (IV) drying the applied coating film to form an unrolled layer; and (V) rolling the unrolled layer to form a positive electrode active material layer.

### (I) Slurry Preparing Step

The positive electrode slurry is prepared by mixing a positive electrode material mixture that contains active material particles, a binder, and a first organic phosphorus compound with a liquid dispersion medium to disperse the positive electrode material mixture in the dispersion medium. The positive electrode material mixture may further contain an additional component (for example, a conductive material). As the liquid dispersion medium, an organic solvent that has an excellent affinity for both the binder and the first organic phosphorus compound is used.

As the organic solvent, it is preferable to use N-methyl-2-pyrrolidone (NMP). However, it is also possible to use an alcohol such as ethanol, an ether such as tetrahydrofuran, an amide such as dimethylformamide, a ketone such as cyclohexanone, or the like.

The first organic phosphorus compound may be at least partially dissolved in the dispersion medium in advance by being mixed with the dispersion medium. For example, a dispersion liquid of the first organic phosphorus compound in the form of particles having an average particle size d1 (d1 < D1 or d1 < 0.8D1) may be prepared by mixing the first organic phosphorus compound in the form of particles having an average particle size D1 with the dispersion medium. This facilitates covering of at least a portion of the surfaces of the active material particles with the first organic phosphorus compound or the coating film derived from the first organic phosphorus compound. As used herein, the term "average particle size" refers to a median diameter (D₅₀) at a cumulative volume of 50% in a volume-based particle size distribution obtained using a laser diffraction particle size distribution measurement apparatus.

As the binder, for example, a fluorine resin, a hydrogenated nitrile butadiene rubber or the like can be used, but the binder is not particularly limited thereto. Examples of the fluorine resin include polyvinylidene fluoride (PVDF), polytetrafluoroethylene (PTFE), perfluoroalkoxy alkane (PFA), a tetrafluoroethylene-hexafluoropropylene copolymer (FEP), an ethylene-tetrafluoroethylene copolymer (ETFE), a vinylidene fluoride-hexafluoropropylene copolymer, and the like.

### (II) Step of Providing Positive Electrode Current Collector

As the positive electrode current collector, a sheet-shaped conductive material (a metal foil, a mesh, a net, a punched sheet, or the like) is used. In particular, it is preferable to use a metal foil. Examples of the material of the positive electrode current collector include stainless steel, aluminum, an aluminum alloy, titanium, and the like. The thickness of the positive electrode current collector is, but is not particularly limited to, for example, 1 to 50 µm, and may be 5 to 30 µm.

### (III) Step of Forming Applied Coating Film using Positive Electrode Slurry

An applied coating film is formed by applying the positive electrode slurry to a surface of the positive electrode current collector. As the application apparatus for applying the positive electrode slurry, for example, a bar coater, a gravure coater, a blade coater, a roll coater, a comma coater, a die coater, a lip coater, or the like is used.

In the positive electrode slurry applied to the surface of the positive electrode current collector, at least a portion of the first organic phosphorus compound may be in the form of particles having a particle size of 0.1 µm or more and 5 µm or less. With this configuration, it is possible to easily obtain a positive electrode active material layer that contains the first organic phosphorus compound having a particle size of 0.1 µm or more and 5 µm or less.

### (IV) Step of Drying Applied Coating Film

Next, the applied coating film is dried to volatize the dispersion medium to form an unrolled applied coating film. The drying condition may be controlled as appropriate to cause the first organic phosphorus compound to migrate from the positive electrode current collector side toward the outermost surface side (or in other words, the separator side) together with the dispersion medium. As a result, the first organic phosphorus compound is distributed more in the positive electrode active material layer on the outermost surface side rather than on the positive electrode current collector side of the positive electrode active material layer. The closer to the outermost surface side of the positive electrode active material layer, the more likely that the oxidative decomposition reaction of the electrolyte proceeds. This is because the electrolyte flows more in that region. The effect of suppressing the oxidative decomposition reaction of the electrolyte becomes more prominent by distributing the first organic phosphorus compound more on the outermost surface side.

### (V) Step of Rolling Unrolled Layer

Next, the unrolled layer is rolled to form a positive electrode active material layer. There is no particular limitation on the rolling condition, but the density of the active material particles (positive electrode active material) in the positive electrode active material layer formed through rolling is, for example, 3.3 g/cm³ or more and 4.0 g/cm³ or less, and may be 3.5 g/cm³ or more and 4.0 g/cm³ or less.

When the first organic phosphorus compound is distributed more on the outermost surface side of the positive electrode active material layer, a presence probability Pb and a presence probability Pt may satisfy, for example, 1.2 ≤ Pt/Pb, where the thickness of the positive electrode active material layer is represented by T, the presence probability Pb is the presence probability of the first organic phosphorus compound present in a region (hereinafter also referred to as a "lower layer region") of the positive electrode active material layer from a surface of the positive electrode current collector to a position 0.5T of the positive electrode active material layer, and the presence probability Pt is the presence probability of the first organic phosphorus compound present in a region (hereinafter also referred to as an "upper layer region") of the positive electrode active material layer from the position 0.5T from the surface of the positive electrode current collector to the outermost surface of the positive electrode active material layer.

The presence probabilities Pb and Pt can be determined by subjecting the positive electrode cross-section sample obtained using the above-described method to SEM analysis and EDX analysis. Specifically, in a first organic phosphorus compound map obtained from the EDX analysis data of the cross-section sample, an occupied area of the first organic phosphorus compound in the lower layer region and an occupied area of the first organic phosphorus compound in the upper layer region are determined. At this time, all first organic phosphorus compound particles are counted regardless of the particle size of the first organic phosphorus compound particles. Then, a proportion of the occupied area of the first organic phosphorus compound in the lower layer region and a proportion of the occupied area of the first organic phosphorus compound in the upper layer region are defined as presence probabilities Pb and Pt, respectively. The presence probabilities Pb and Pt are determined in an observation field of view of 400 µm² (for example, a 20 µm × 20 µm rectangular observation field of view). The presence probabilities Pb and Pt may be average values of the presence probabilities Pb and Pt determined in a plurality of (for example, three or more) observation fields of view, respectively. It is desirable to set the observation fields of view near the center of each of the lower layer region and the upper layer region of the cross-section sample.

The step of providing a negative electrode includes the steps of: for example, (I) preparing a negative electrode slurry that contains active material particles (negative electrode active material particles), a binder, and a dispersion medium; (II) providing a negative electrode current collector; (III) applying the negative electrode slurry to a surface of the negative electrode current collector to form an applied coating film; (IV) drying the applied coating film to form an unrolled layer; and (V) rolling the unrolled layer to form a negative electrode active material layer.

The above-described steps may be performed in the same manner as those of the step of providing a positive electrode. However, the negative electrode does not necessarily need to include a negative electrode active material layer. For example, in the case of a lithium (metal) secondary battery, the negative electrode is only required to include at least a negative electrode current collector. In this case, the steps other than the step (II) of providing a negative electrode current collector can be omitted.

The step of preparing a non-aqueous electrolyte can be performed by, for example, dissolving an electrolyte salt in a non-aqueous solvent and also dissolving a second organic phosphorus compound. It is desirable to dissolve the entire second organic phosphorus compound in the non-aqueous electrolyte. However, the non-aqueous electrolyte does not necessarily need to be in the form of a liquid, and may be in the form of a gel or a solid.

The step of assembling a non-aqueous electrolyte secondary battery includes the steps of: for example, producing an electrode group that includes the positive electrode, the negative electrode, and a separator interposed between the positive electrode and the negative electrode; housing the electrode group in a battery case together with a non-aqueous electrolyte; and hermetically sealing the battery case.

Hereinafter, the configuration of the non-aqueous electrolyte secondary battery will be further described by taking a lithium ion secondary battery as an example.

### [Positive Electrode]

As the positive electrode, a positive electrode that has the above-described features is used. The positive electrode active material layer is formed using a positive electrode material mixture. The positive electrode material mixture contains active material particles (positive electrode active material particles), a binder, and a first organic phosphorus compound as essential components, and may also contain an optional component. Examples of the optional component include a conductive material, a thickener, and the like.

The thickness of the positive electrode active material layer is, but is not particularly limited to, for example, 20 µm or more and 120 µm or less, and may be 40 µm or more and 80 µm or less. The positive electrode active material layer may also be one positive electrode active material layer formed of a plurality of layers of different configurations. For example, two or more layers that contain active material particles that have different average particle sizes may be stacked, or two or more layers that contain different types of positive electrode active materials or have different compositions may be stacked.

The average particle size of the active material particles (the positive electrode active material particles) is, for example, 3 µm or more and 30 µm or less, and may be 5 µm or more and 25 µm or less. As described above, the term "average particle size" used here refers to a median diameter (D₅₀) at a cumulative volume of 50% in a volume-based particle size distribution obtained using a laser diffraction particle size distribution measurement apparatus. The active material particles can be separated and recovered from the positive electrode. As the measurement apparatus, for example, LA-750 available from HORIBA, Ltd. can be used.

The average particle size of the active material particles may be determined using the above-described positive electrode cross-section sample. The average particle size of the active material particles may be an average value obtained by capturing an SEM image of the cross-section sample such that 10 or more active material particles can be observed in the SEM image, subjecting the SEM image to image processing to determine the diameter of an equivalent circle that has the same area as the cross section of each of the 10 or more active material particles, and averaging the obtained diameters.

The positive electrode active material for constituting the active material particles may contain a lithium-containing transition metal oxide. From the viewpoint of achieving a high capacity, the lithium-containing transition metal oxide desirably contains a lithium nickel oxide (a composite oxide N) that contains lithium and Ni and has a layered-rock salt crystal structure. The proportion of the composite oxide N in the positive electrode active material is, for example, 70 mass% or more, and may be 90 mass% or more, or 95 mass% or more. The proportion of Ni relative to metal elements other than Li contained in the composite oxide N may be 50 atom% or more.

The lithium nickel oxide (the composite oxide N) is represented by, for example, the following formula: Li_{α}Tiₓ₁Mnₓ₂M₍₁₋ₓ₁₋ₓ₂₎O_{2+β}, where M represents at least one element selected from the group consisting of V, Co, Mn, Mg, Al, Ca, Ti, Cu, Zn, and Nb, α, β, x1, and x2 satisfy: 0.9 ≤ α ≤ 1.10; -0.05 ≤ β ≤ 0.05; 0.5 ≤ x1 < 1; 0 < x2 ≤ 0.5; and 0 < 1-x1-x2 ≤ 0.1. α varies during charge and discharge.

The composite oxide N contains Ni and Mn, and may also contain, as the element M, at least one selected from the group consisting of Co and Al. Co, Mn, and Al contribute to stabilization of the crystal structure of the composite oxide N.

The proportion of Mn relative to metal elements other than Li may be 50 atom% or less, or 30 atom% or less. The proportion of Mn relative to metal elements other than Li may be 1 atom% or more, 3 atom% or more, or 5 atom% or more. By using Mn as a main component together with Ni, it is possible to obtain a positive electrode active material that exhibits a high capacity at low cost.

From the viewpoint of achieving low cost and a high capacity, the proportion of Co relative to metal elements other than Li contained in the composite oxide N is desirably 0 atom% or more and 10 atom% or less, and more desirably 0 atom% or more and 5 atom% or less.

The proportion of Al relative to metal elements other than Li may be 10 atom% or less, or 5 atom% or less. The proportion of Al relative to metal elements other than Li may be 1 atom% or more, 3 atom% or more, or 5 atom% or more.

The composite oxide N in which the proportion of Ni and Mn relative to metal elements other than Li is greater than 90 atom% tends to have a high level of surface activity and easily cause a side reaction. For this reason, it is important to take measures to suppress elution of metal ions into the non-aqueous electrolyte. To put it differently, the advantageous effects obtained by containing the first organic phosphorus compound into the positive electrode active material layer, and also containing the second organic phosphorus compound into the non-aqueous electrolyte are particularly prominent in the composite oxide N in which the proportion of Ni and Mn relative to metal elements other than Li is greater than 90 atom%.

Examples of the conductive material that can be contained in the positive electrode active material layer as an optional component include carbon nanotubes (CNTs), carbon fibers other than CNTs, conductive particles (for example, carbon black, graphite), and the like.

### [Negative Electrode]

The negative electrode includes at least a negative electrode current collector, and includes, for example, a negative electrode current collector and a negative electrode active material layer. The negative electrode active material layer is supported on one or both surfaces of the negative electrode current collector.

As the negative electrode current collector, a non-porous conductive substrate (a metal foil or the like), a porous conductive substrate (a mesh, a net, a punched sheet, or the like) is used. Examples of the material of the negative electrode current collector include stainless steel, nickel, a nickel alloy, copper, a copper alloy, and the like.

The negative electrode active material layer may be a negative electrode material mixture layer formed using a negative electrode material mixture. The negative electrode material mixture layer is in the form of a coating or a film. The negative electrode material mixture contains negative electrode active material particles as an essential component, and may also contain a binder, a conductive material, a thickener, and the like as optional components. Alternatively, a lithium metal foil or a lithium alloy foil may be attached to the negative electrode current collector as the negative electrode active material layer.

The negative electrode material mixture layer can be formed by, for example, applying a negative electrode slurry prepared by dispersing a negative electrode material mixture that contains negative electrode active material particles, a binder, and the like in a dispersion medium to a surface of the negative electrode current collector, and drying the negative electrode slurry. The applied coating film after drying may be rolled where necessary.

The negative electrode active material contains a material that electrochemically absorbs and desorbs lithium ions, a lithium metal, a lithium alloy, or the like. As the material that electrochemically absorbs and desorbs lithium ions, a carbon material, an alloy-based material, or the like is used. Examples of the carbon material include graphite, graphitizable carbon (soft carbon), non-graphitizable carbon (hard carbon), and the like. In particular, it is preferable to use graphite because it has excellent charge/discharge stability and a small irreversible capacity. As the alloy-based material, an alloy-based material that contains at least one metal that can be alloyed with lithium may be used. Specific examples include silicon, tin, a silicon alloy, a tin alloy, a silicon compound, and the like. It is also possible to use silicon oxide, tin oxide, or the like.

As the alloy-based material that contains silicon, for example, a composite material that contains a lithium ion conductive phase and silicon particles dispersed in the lithium ion conductive phase can be used. The lithium ion conductive phase can be, for example, a silicon oxide phase, a silicate phase, a carbon phase, or the like. The silicon oxide phase may be composed mainly (for example, 95 to 100 mass%) of silicon dioxide. In particular, it is preferable to use a composite material that contains a silicate phase and silicon particles dispersed in the silicate phase because it exhibits a high capacity and has a small irreversible capacity. The silicate phase is preferably a lithium silicate phase (a silicate phase that contains lithium) that has a small irreversible capacity and a high initial charge/discharge efficiency.

As the binder, for example, a resin material is used. Examples of the binder include polyacrylic acid, a polyacrylate, a derivative thereof, a fluorine resin, a polyolefin resin, a polyamide resin, a polyimide resin, an acrylic resin, a vinyl resin, rubber particles, and the like. The binders may be used alone or in a combination of two or more.

Examples of the conductive material include carbon nanotubes (CNTs), carbon fibers other than CNTs, conductive particles (for example, carbon black, graphite), and the like.

Examples of the thickener include: carboxymethyl cellulose (CMC) and a modified form thereof (including a salt such as an Na salt); a derivative (a cellulose ether or the like) of cellulose such as methyl cellulose; a saponified polymer that has a vinyl acetate unit such as polyvinyl alcohol; a polyether (a polyalkylene oxide such as polyethylene oxide); and the like.

### [Separator]

The separator is interposed between the positive electrode and the negative electrode. The separator has high ion permeability, an appropriate mechanical strength, and appropriate insulation properties. As the separator, a microporous thin film, a woven fabric, a non-woven fabric, or the like can be used. As the material of the separator, for example, a polyolefin such as polypropylene or polyethylene is used. The separator may include a heat resistant insulation layer on at least one surface layer portion of the separator. The heat resistant insulation layer may contain an inorganic oxide filler as a main component (for example, in an amount of 80 mass% or more), or a heat resistant resin as a main component (for example, in an amount of 40 mass% or more). As the heat resistant resin, a polyamide resin such as an aromatic polyamide (aramid), a polyimide resin, a polyamideimide resin, or the like may be used.

### [Non-Aqueous Electrolyte]

The non-aqueous electrolyte contains a non-aqueous solvent, an electrolyte salt dissolved in the non-aqueous solvent, and a second organic phosphorus compound. The electrolyte salt includes at least a lithium salt. The concentration of the lithium salt in the non-aqueous electrolyte is, for example, 0.5 mol/L or more and 2 mol/L or less.

As the non-aqueous solvent, for example, a cyclic carbonic acid ester, a linear carbonic acid ester, a cyclic carboxylic acid ester, or the like can be used. Examples of the cyclic carbonic acid ester include propylene carbonate (PC), ethylene carbonate (EC), and the like. Examples of the linear carbonic acid ester include diethyl carbonate (DEC), ethyl methyl carbonate (EMC), dimethyl carbonate (DMC), and the like. Examples of the cyclic carboxylic acid ester include γ-butyrolactone (GBL), γ-valerolactone (GVL), and the like. The non-aqueous solvents may be used alone or in a combination of two or more.

Examples of the lithium salt include: a lithium salt of chlorine-containing acid (LiClO₄, LiAlCl₄, LiB₁₀Cl₁₀, or the like); a lithium salt of fluorine-containing acid (LiPF₆, LiBF₄, LiSbF₆, LiAsF₆, LiCF₃SO₃, LiCF₃CO₂, or the like); a lithium salt of fluorine-containing acid imide (LiN(SO₂F)₂, LiN(CF₃SO₂)₂, LiN(CF₃SO₂) (C₄F₉SO₂), LiN(C₂F₅SO₂)₂, or the like); a lithium halide (LiCl, LiBr, LiI, or the like); and the like. The lithium salt may be used alone or in a combination of two or more. When a phosphorus element-containing salt such as LiPF₆ is used as the lithium salt, a tiny amount of phosphorus element derived from the lithium salt may be contained in the positive electrode active material layer. However, the amount of phosphorus element is much smaller than the amount of phosphorus element derived from the first organic phosphorus compound contained in the positive electrode active material layer, and thus is negligible. Also, the correlation between the lithium salt concentration in the non-aqueous electrolyte and the content of phosphorus element in the non-aqueous electrolyte derived from the lithium salt can be determined by, for example, creating a calibration curve. The lithium salt concentration can be determined from the lithium ion concentration. Accordingly, even when a phosphorus element-containing salt is used as the lithium salt, it is possible to calculate the content of phosphorus element derived from the second organic phosphorus compound contained in the non-aqueous electrolyte.

As an example of a structure of the non-aqueous electrolyte secondary battery, the non-aqueous electrolyte secondary battery may have a structure in which an electrode group formed by spirally winding the positive electrode and the negative electrode with the separator interposed therebetween is housed in a battery case or an exterior body together with the non-aqueous electrolyte. However, the structure is not limited thereto, and an electrode group of a different configuration may be used. For example, a stacked electrode group formed by stacking the positive electrode and the negative electrode with the separator interposed therebetween may be used. There is also no limitation on the shape of the non-aqueous electrolyte secondary battery, and the non-aqueous electrolyte secondary battery may have, for example, a cylindrical shape, a prismatic shape, a coin shape, a button shape, a laminate shape, or the like.

Hereinafter, a structure of the non-aqueous electrolyte secondary battery will be described with reference to FIG. 1. FIG. 1 is a vertical cross-sectional view of a cylindrical non-aqueous electrolyte secondary battery (hereinafter also referred to as a "secondary battery 10") according to an example of the present embodiment. However, the present disclosure is not limited to the configuration described below.

The secondary battery 10 includes an electrode group 18, a non-aqueous electrolyte (not shown), and a bottomed cylindrical battery can 22 that houses the electrode group 18 and the non-aqueous electrolyte. A sealing body 11 is fixed by crimping to an opening of the battery can 22 via a gasket 21. With this configuration, the inside of the battery is hermetically sealed. The sealing body 11 includes a valve 12, a metal plate 13, and an annular insulation member 14 provided between the valve 12 and the metal plate 13. The valve 12 and the metal plate 13 are connected to each other at their center portions. A positive electrode lead 15a drawn out from a positive electrode 15 is connected to the metal plate 13. Accordingly, the valve 12 functions as an external terminal for the positive electrode. A negative electrode lead 16a drawn out from a negative electrode 16 is connected to the inner surface of the bottom of the battery can 22. An annular groove portion 22a is formed near an opening end of the battery can 22. A first insulating plate 23 is provided between one end face of the electrode group 18 and the annular groove portion 22a. A second insulating plate 24 is provided between the other end face of the electrode group 18 and the bottom of the battery can 22. The electrode group 18 is formed by spirally winding the positive electrode 15 and the negative electrode 16 with a separator 17 interposed between the positive electrode 15 and the negative electrode 16.

### [Examples]

Hereinafter, the present disclosure will be described specifically based on examples and comparative examples. However, the present disclosure is not limited to the examples given below.

### <<Comparative Example 1>>

A lithium ion secondary battery test cell was produced and evaluated in the following procedure.

### (1) Production of Positive Electrode

### (I) Slurry Preparing Step

A positive electrode slurry was prepared by mixing a positive electrode material mixture containing 95 parts by mass of active material particles (LiNi_{0.8}Mn_{0.2}O₂), 2.5 parts by mass of polyvinylidene fluoride (PVDF) as a binder, and 2.5 parts by mass of acetylene black as a conductive material with NMP as a liquid dispersion medium to disperse the positive electrode material mixture in the NMP.

### (II) Step of Providing Positive Electrode Current Collector

As a positive electrode current collector, an aluminum foil (with a thickness of 15 µm) was provided.

### (III) Step of Forming Applied Coating Film using Positive Electrode Slurry

An applied coating film was formed by applying the positive electrode slurry to one surface of the positive electrode current collector using a predetermined coater.

### (IV) Step of Drying Applied Coating Film

Next, the applied coating film was dried at 80°C to volatize the dispersion medium to form an unrolled layer.

### (V) Step of Rolling Unrolled Layer

Next, the unrolled layer was rolled to form a positive electrode active material layer (with a thickness of 95 µm and a density of 3.6g/cm³) on one surface of the aluminum foil. In this way, a positive electrode was obtained.

The positive electrode was cut into a predetermined shape, and the positive electrode active material layer was partially stripped off to obtain an evaluation positive electrode. The positive electrode had a shape including a 60 mm × 40 mm power generation region having the positive electrode active material layer and a 10 mm × 10 mm connection region not having the positive electrode active material layer. A positive electrode tab lead was connected to the connection region.

### (2) Production of Negative Electrode

A negative electrode was produced by attaching a lithium metal foil to one surface of an electrolytic copper foil (as a current collector). The negative electrode was cut into the same shape as that of the positive electrode, and the lithium metal foil on the connection region was stripped off. After that, a negative electrode tab lead was connected to the connection region.

### (3) Preparation of Non-Aqueous Electrolyte

A non-aqueous electrolyte was prepared by dissolving LiPF₆, at a concentration of 1 mol/L, in a mixed solvent of fluoroethylene carbonate (FEC) and dimethyl carbonate (DMC) mixed at a volume ratio of 20:80.

### (4) Production of Evaluation Cell

A negative electrode-regulated cell with a design capacity of 114 mAh was produced using the evaluation positive electrode and the negative electrode described above. A flat electrode group was obtained by stacking the positive electrode and the negative electrode with a polyethylene separator (with a thickness of 15 µm) interposed between the positive electrode active material layer and the lithium metal foil. The electrode group was housed in an enveloped laminate film case having openings on both ends together with 1.2 cm³ of the non-aqueous electrolyte, and each tab lead was drawn out from one of the openings, and the opening was sealed. After that, an operation of placing the electrode group housed in the case under a reduced pressure of 0.02 MPa for 3 minutes and then returning to atmospheric pressure was performed two times so as to impregnate the positive electrode active material layer with the non-aqueous electrolyte. Finally, the other one of the openings was sealed to obtain an evaluation cell B1 of Comparative Example 1. The evaluation cell was produced in a dry air atmosphere with a dew point of -60°C or less.

### (5) Evaluation of Battery

The evaluation cell was clamped between a pair of 10 cm × 5 cm stainless steel plates (with a thickness of 6 mm) and pressed at a pressure of 3.2 MPa and fixed. Then, the evaluation cell was subjected to the following charge/discharge operation twice in a thermostatic chamber maintained at 25°C: charging the evaluation cell at a constant current of 0.3 It to a voltage of 4.5 V and then discharging the evaluation cell at constant current of 0.3 It to a voltage of 2.5 V Next, the evaluation cell was charged at a constant current of 0.3 It to a voltage of 4.5 V After that, the temperature of the thermostatic chamber was changed to 55°C, and trickle charging was performed in which the evaluation cell was kept at a constant voltage of 4.5 V for 3 days.

After the trickle charging, the evaluation cell was disassembled, and the negative electrode was cleaned with dimethyl carbonate. After that, the amount of transition metals (the total amount of Ni and Mn) deposited on the negative electrode was determined using an inductively coupled plasma atomic emission spectroscopy apparatus (ICP-AES), and defined as "the amount of eluted metal ions" eluted from the positive electrode into the non-aqueous electrolyte.

Also, the positive electrode was cleaned with dimethyl carbonate, and after that, the amount of phosphorus element (P) contained in the positive electrode active material layer was determined using an inductively coupled plasma atomic emission spectroscopy apparatus (ICP-AES). However, no phosphorus element was detected.

### <<Comparative Example 2>>

In the above-described section (3) Preparation of Non-Aqueous Electrolyte, as the organic phosphorus compound (P), 2 mass% of tris(trimethylsilyl)phosphate (TMSP) represented by the following formula was contained into the non-aqueous electrolyte.

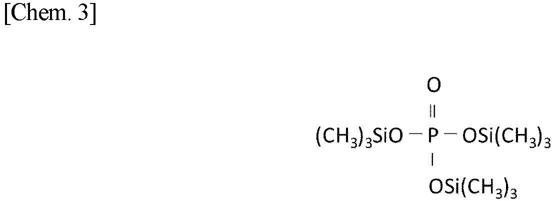

An evaluation cell B2 was produced and evaluated in the same manner as in Comparative Example 1, except that the organic phosphorus compound (P) was used as described above. TMSP was completely dissolved in the non-aqueous electrolyte.

### <<Comparative Example 3>>

In the above-described (I) Slurry Preparing Step under the section (1) Production of Positive Electrode, as the organic phosphorus compound (P), decylphosphonic acid (DP) (with an average particle size D1 of 3 µm) represented by the following formula, which is in the form of a solid at ambient temperature, was contained into the positive electrode material mixture such that the content of decylphosphonic acid in the positive electrode active material layer was 1 mass%.

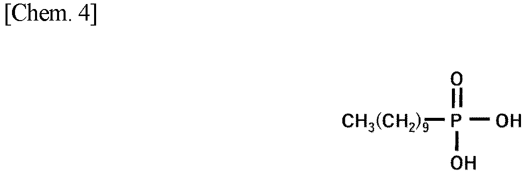

An evaluation cell B3 was produced and evaluated in the same manner as in Comparative Example 1, except that has described above. Here, instead of completely dissolving decylphosphonic acid in the positive electrode slurry, a portion of decylphosphonic acid was allowed to be present in the positive electrode slurry in the form of particles with a particle size of 0.1 µm or more and 5 µm or less (average particle size d1 < 3 µm).

### <<Comparative Example 4>>

An evaluation cell B4 was produced and evaluated in the same manner as in Comparative Example 1, except that, in the above-described (I) Slurry Preparing Step under the section (1) Production of Positive Electrode, as the organic phosphorus compound (P), TMSP was contained into the positive electrode material mixture such that the content of TMSP in the positive electrode active material layer was 1 mass%. TMSP was completely dissolved in the positive electrode slurry.

### <<Comparative Example 5>>

An evaluation cell B5 was produced and evaluated in the same manner as in Comparative Example 1, except that, in the above-described (I) Slurry Preparing Step under the section (1) Production of Positive Electrode, as the active material particles, LiNi_{0.8}Co_{0.15}Al_{0.05}O₂ was used instead of LiNi_{0.8}Mn_{0.2}O₂.

### <<Example 1>>

An evaluation cell A1 was produced and evaluated in the same manner as in Comparative Example 1, except that, in the above-described (I) Slurry Preparing Step under the section (1) Production of Positive Electrode, as the organic phosphorus compound (P), decylphosphonic acid (DP) (with an average particle size D1 of 3 µm) was contained into the positive electrode material mixture such that the content of decylphosphonic acid in the positive electrode active material layer was 1 mass%, and also, in the above-described section (3) Preparation of Non-Aqueous Electrolyte, 2 mass% of TMSP was contained into the non-aqueous electrolyte as the organic phosphorus compound (P). Instead of completely dissolving decylphosphonic acid in the positive electrode slurry, a portion of decylphosphonic acid was allowed to be present in the positive electrode slurry in the form of particles with a particle size of 0.1 µm or more and 5 µm or less (average particle size d1 < 3 µm). TMSP was completely dissolved in the non-aqueous electrolyte.

### <<Example 2>>

An evaluation cell A2 was produced and evaluated in the same manner as in Comparative Example 1, except that, in the above-described (I) Slurry Preparing Step under the section (1) Production of Positive Electrode, as the organic phosphorus compound (P), TSMP was contained into the positive electrode material mixture such that the content of TSMP in the positive electrode active material layer was 1 mass%, and also, in the above-described section (3) Preparation of Non-Aqueous Electrolyte, 2 mass% of TMSP was contained into the non-aqueous electrolyte as the organic phosphorus compound (P). The TMSP contained in the positive electrode slurry and the TMSP contained in the non-aqueous electrolyte were completely dissolved.

### <<Example 3>>

An evaluation cell A3 was produced and evaluated in the same manner as in Example 1, except that, in the above-described (I) Slurry Preparing Step under the section (1) Production of Positive Electrode, as the active material particles, LiNi_{0.8}Co_{0.15}Al_{0.05}O₂ was used instead of LiNi_{0.8}Mn_{0.2}O₂.

### <Quantification of Phosphorous (P) Element in Positive Electrode Active Material Layer>

Cells for phosphorous (P) element quantification were produced in the same manner as described above by using the positive electrodes used in the cells B2 to B4, A1, and A2, and a non-aqueous electrolyte obtained by dissolving lithium bis(fluorosulfonyl)imide (LiN(SO₂F)₂), at a concentration of 1 mol/L, in a mixed solvent of fluoroethylene carbonate (FEC) and dimethyl carbonate (DMC) mixed at a volume ratio of 20:80. In the non-aqueous electrolytes of the cells including the positive electrodes used in the cells B2, A1, and A2, 2 mass% of TMSP was dissolved. Each cell was charged and discharged at a voltage between 4.2V to 2.5 V After that, the positive electrode was taken out from the cell with a DOD of 100%, and the positive electrode was cleaned with DMC. In this way, the positive electrode that had undergone charging and discharging was obtained. The amount of phosphorus element (P) contained in the positive electrode active material layer of the obtained positive electrode was determined using an inductively coupled plasma atomic emission spectroscopy apparatus (ICP-AES).

The results are shown in Table 1. The values shown in Table 1 are indicated by relative values with the amount of eluted metal ions of the cell B1 of Comparative Example 1 being set to 100%.

**[Table 1]**

| Cell | Organic phosphorus compound (P) (mass%) | | Amount of eluted metal ions (%) | Amount of phosphorous (P) element detected (ppm) |
|---|---|---|---|---|
| | Positive electrode active material layer | Non-aqueous electrolyte | | |
| B1 | 0 | 0 | 100 | 0 |
| B2 | 0 | 2 (TMSP) | 60 | 70 |
| B3 | 1 (DP) | 0 | 82 | 1200 |
| B4 | 1 (TMSP) | 0 | 60 | 850 |
| B5 | 0 | 0 | 36 | - |
| A1 | 1 (DP) | 2 (TMSP) | 12 | 1220 |
| A2 | 1 (TMSP) | 2 (TMSP) | 17 | 920 |
| A3 | 1 (TMSP) | 2 (TMSP) | 12 | - |

It can be seen from Table 1 that the amount of eluted metal ions was prominently reduced in the cells A1 and A2. On the other hand, when the organic phosphorus compound (P) was dissolved only in the non-aqueous electrolyte, the reduction rate of the amount of eluted metal ions was about 40%. Also, when the organic phosphorus compound (P) was contained only into the positive electrode active material layer, the reduction rate of the amount of eluted metal ions was about 18 to 40%. In contrast, when the organic phosphorus compound (P) was contained into both the positive electrode active material layer and the non-aqueous electrolyte, the reduction rate of the amount of eluted metal ions was 83% to 88%.

Here, regarding the reduction of the amount of eluted metal ions, it is assumed that additivity is established between an addition effect of the organic phosphorus compound (P) only to the positive electrode active material layer and an addition effect of the organic phosphorus compound (P) only to the non-aqueous electrolyte. When the organic phosphorus compound (P) is contained only into the positive electrode active material layer, the amount of eluted metal ions is reduced to 60 to 82. When the organic phosphorus compound (P) is dissolved only in the non-aqueous electrolyte, the amount of eluted metal ions is reduced to 60%. That is, when additivity is established, it is expected that the amount of eluted metal ions is reduced to (60 to 88) × 0.6 = 36% to 52%. On the other hand, the amount of eluted metal ions was reduced to 12 to 17% in the cells A1 and A2, respectively, from which it can be seen that a synergistic effect greater than the additivity effect is obtained.

Also, when the organic phosphorus compound (P) is contained directly into the positive electrode material mixture (B3, B4, A1, and A2), a much larger amount of phosphorus element is detected from the positive electrode active material layer, as compared with that when the organic phosphorus compound (P) is contained only into the non-aqueous electrolyte (B2). From this fact, it can be seen that it is important to contain the organic phosphorus compound (P) into both the positive electrode active material layer and the non-aqueous electrolyte.

Also, it can be seen, from the comparison between Example 1, Example 3, and Comparative Example 5, that, in particular, a high effect of reducing the amount of eluted metal ions can be obtained when a positive electrode active material containing Ni and Mn as main components is used.

### [Industrial Applicability]

The non-aqueous electrolyte secondary battery according to the present disclosure is useful as a main power supply for mobile communication equipment, portable electronic equipment, electric vehicles, and the like.

The present invention has been described in terms of the presently preferred embodiments, but the disclosure should not be interpreted as limiting. Various alterations and modifications will no doubt become apparent to those skilled in the art to which the present invention pertains, after having read the disclosure. Accordingly, it is to be understood that the appended claims be interpreted as covering all alterations and modifications which fall within the true spirit and scope of the present invention.

### [Reference Signs List]

10: secondary battery
11: sealing body
12: valve
13: metal plate
14: insulation member
15: positive electrode
15a: positive electrode lead
16: negative electrode
16a: negative electrode lead
17: separator
18: electrode group
21: gasket
22: battery can
22a: groove portion
23: first insulating plate
24: second insulating plate

## Claims

1. A non-aqueous electrolyte secondary battery comprising:
a positive electrode;
a negative electrode; and
a non-aqueous electrolyte,
wherein the positive electrode includes a positive electrode current collector and a positive electrode active material layer supported on the positive electrode current collector,
the positive electrode active material layer contains active material particles, a binder, and a first organic phosphorus compound,
a content Cpn of the first organic phosphorus compound in the positive electrode active material layer is 0.1 mass% or more and 5 mass% or less, and
the non-aqueous electrolyte contains a non-aqueous solvent, an electrolyte salt, and a second organic phosphorus compound.

2. The non-aqueous electrolyte secondary battery in accordance with claim 1,
wherein Cpn/Cen that is a ratio of the content Cpn (mass%) of the first organic phosphorus compound in the positive electrode active material layer relative to a content Cen (mass%) of the second organic phosphorus compound in the non-aqueous electrolyte is 0.1/4.0 or more and 4.0/3.0 or less.

3. The non-aqueous electrolyte secondary battery in accordance with claim 1,
wherein the first organic phosphorus compound and the second organic phosphorus compound are each independently represented by the following general formula (1): 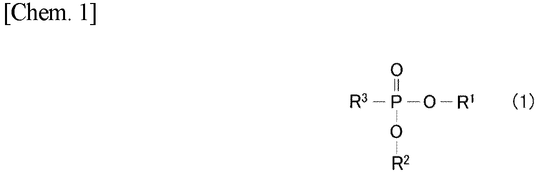
where R¹ and R² each independently represent a surface of the active material particle, -H, -CH₂X, -CH₂CH₂X, or -Si((CH₂)ₙCH₃)₃,
R³ represents -(CH₂)ₘCH₂X or -O-Si((CH₂)ₙCH3)3,
X represents -H, -NH₂, -COOH, -CN, or -F,
integers n that define R¹, R², and R³ each independently represent 0 or 1,
an integer m that defines R³ represents 0 to 16, and
when there are a plurality of Xes, the plurality of Xes are independent of each other.

4. The non-aqueous electrolyte secondary battery in accordance with claim 2,
wherein R¹ and R² each independently represent -Si((CH₂)ₙCH₃)₃, and
R³ represents -O-Si((CH₂)ₙCH₃)₃.

5. The non-aqueous electrolyte secondary battery in accordance with claim 2,
wherein R¹ and R² each independently represent -H, and
R³ represents -(CH₂)ₘCH₃.

6. The non-aqueous electrolyte secondary battery in accordance with any one of claims 1 to 5,
wherein a content of the second organic phosphorus compound in the non-aqueous electrolyte is 0.1 mass% or more and 3 mass% or less.

7. The non-aqueous electrolyte secondary battery in accordance with any one of claims 1 to 5,
wherein a least a portion of surfaces of the active material particles is covered with a coating film, and
the coating film contains a phosphorus element.

8. The non-aqueous electrolyte secondary battery in accordance with claim 7,
wherein the coating film at least partially has a thickness of 0.2 nm or more.

9. The non-aqueous electrolyte secondary battery in accordance with any one of claims 1 to 5,
wherein the active material particles contain a lithium-containing transition metal oxide,
the lithium-containing transition metal oxide contains a lithium nickel oxide that contains lithium and Ni and has a layered-rock salt crystal structure, and
a proportion of Ni relative to metal elements other than Li contained in the lithium nickel oxide is 50 atom% or more.

10. The non-aqueous electrolyte secondary battery in accordance with claim 9,
wherein the lithium nickel oxide is represented by the following formula:
Li_{α}Niₓ₁Mnₓ₂M₍₁₋ₓ₁₋ₓ₂₎O_{2+β},
where M represents at least one element selected from the group consisting of V, Co, Mn, Mg, Al, Ca, Ti, Cu, Zn, and Nb, and
α, β, x1, and x2 satisfy: 0.9 ≤ α ≤ 1.10; -0.05 ≤ β ≤ 0.05; 0.5 ≤ x1 < 1; 0 < x2 ≤ 0.5; and 0 < 1-x1-x2 ≤ 0.1.

11. Anon-aqueous electrolyte secondary battery comprising:
a positive electrode;
a negative electrode; and
a non-aqueous electrolyte,
wherein the positive electrode includes a positive electrode current collector and a positive electrode active material layer supported on the positive electrode current collector,
the positive electrode active material layer contains active material particles, a binder, and a phosphorus element,
a content of the phosphorus element in the positive electrode active material layer is 100 ppm or more and 4000 ppm or less based on mass,
the non-aqueous electrolyte contains a non-aqueous solvent, an electrolyte salt, and a phosphorus element, and
Cpn/Cen that is a ratio of a content Cpn (mass%) of the phosphorus element in the positive electrode active material layer relative to a content Cen (mass%) of the phosphorus element in the non-aqueous electrolyte is 0.1/4.0 or more and 4.0/3.0 or less.
